# EUROPEAN PATENT APPLICATION

(11) **EP 3 735 047 A1**
(43) Date of publication of application: **04.11.2020**
(21) Application number: 19183235.1
(22) Date of filing: 28.06.2019
(51) Int. Cl.: H04W 52/02

(54) **A METHOD FOR OPERATING A NB-IOT UE AND A NB-IOT UE PERFORMING THE METHOD**

(30) Priority: 30.04.2019 EP 19171864
(71) Applicant: Commsolid GmbH, 01099 Dresden (DE)
(72) Inventor: Bury, Andreas, 01099 Dresden (DE)
(74) Representative: Lippert Stachow Patentanwälte Rechtsanwälte Partnerschaft mbB

(57) **Abstract**

The invention discloses a method for operating a Narrowband Internet-of-Things user equipment (NB-IoT UE) comprising a radio modem for receiving and transmitting radio frequency signals from a base station, an application controller for controlling the NB-IoT UE, a sensor interface for controlling a sensor of the UE, a power management unit for regulating a battery of the UE, a reference clock oscillator controlled by an external reference clock crystal and for serving the radio modem and a sleep clock oscillator for controlling sleep periods of the NB-IoT UE and a NB-IoT UE performing the method. The object to provide a possibility that UE modem operates precisely without the bill-of-material cost contribution of the external crystal will be solved by a method for operating a NB-IoT UE wherein in a first step for a paging reception after sleep mode of the NB-IoT UE the NB-IoT UE wakes up an the sleep clock oscillator integrated on-chip synchronizes to the radio signal received from the base station, and in a second step a back-off period is applied to allow for a deviation of an actual wake-up time of the NB-IoT UE against a targeted wake-up time using the reference clock oscillator in a low power mode for bridging a remaining time until an actual paging reception.

## Description

The invention discloses a method for operating a Narrowband Internet-of-Things user equipment (NB-IoT UE) comprising a radio modem for receiving and transmitting radio frequency signals from a base station, an application controller for controlling the NB-IoT UE, a sensor interface for controlling a sensor of the UE, a power management unit for regulating a battery of the UE, a reference clock oscillator controlled by an external reference clock crystal and for serving the radio modem and a sleep clock oscillator for controlling sleep periods of the NB-IoT UE.

The invention discloses also a Narrowband Internet-of-Things user equipment for performing the method.

By providing worldwide fast data exchange, the Internet has enabled large scale data analysis.

Furthermore, advances in sensor technology enable a plurality of new applications offering a variety of benefits, e.g., improving efficiency in logistics, agriculture, metering, etc.

The 3GPP NB-IoT Standard according to the 3GPP TS 36.xxx series of specification documents has been established to bring sensors into the Internet, via wireless radio transmission in licensed frequency bands on professionally operated cellular networks.

In NB-IoT (Narrowband Internet-of-Things), the modem-equipped sensor is called the "user equipment" (UE), and it communicates via radio link with a base station called "eNB" ("evolved Node B"). Each eNB serves UEs within a limited area called a "cell", and multiple eNBs cover a larger area and form a cellular network. To get associated with a nearby eNB, the UE first receives the so-called anchor channel transmitted by this eNB. This radio signal is hierarchically structured into subframes of duration one millisecond, 10 subframes comprising a frame, 1024 frames comprising a hyper frame, and 1024 hyper frames being the ambiguity period after which such pattern repeats, i.e., every 2 hours and 55 minutes.

The type of application drives requirements to sensor attached NB-IoT modems: firstly, low power consumption and long lifetime of battery-operated sensors, and secondly, low cost of mass products.

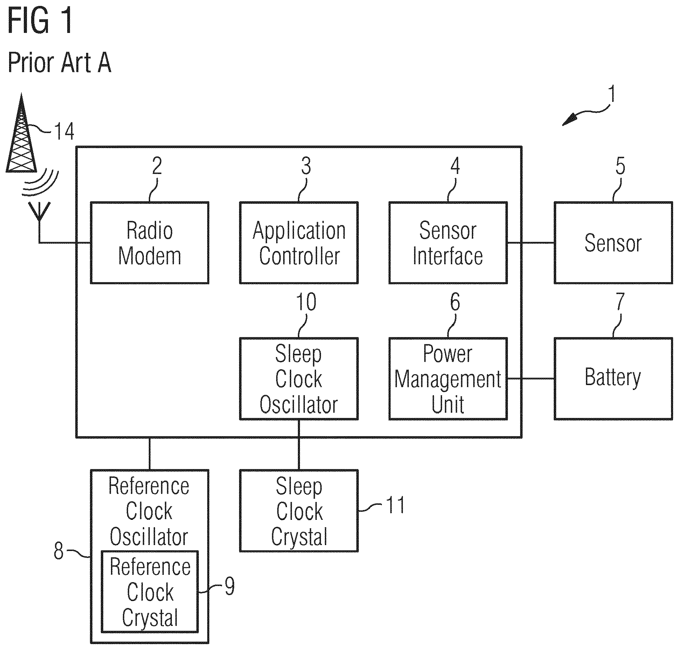

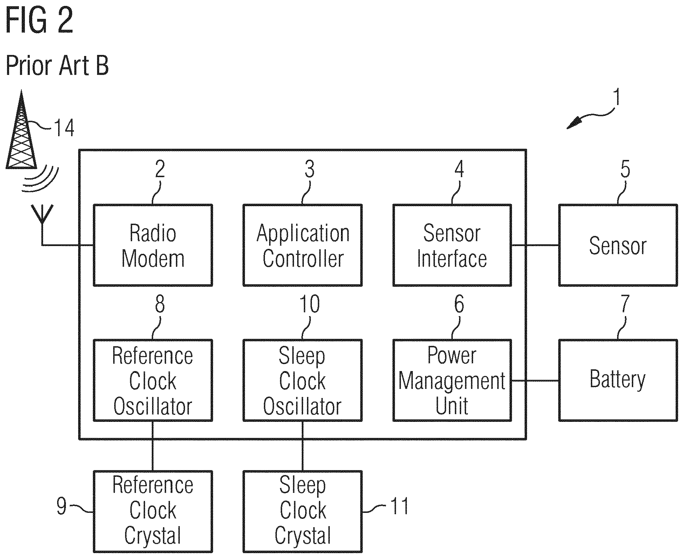

A typical NB-IoT sensor node user equipment comprises a battery, sensor(s), an application controller, an NB-IoT modem, a sleep clock oscillator and a radio transmission reference clock oscillator, illustrated in figure 1 and 2.

Sleep mode is an operation mode where the sensor node user equipment is essentially turned off, only running a wake-up timer driven by the sleep clock oscillator, in order to trigger the next transmission of sensor data, or reception from the eNB, for example a paging reception.

To minimize power consumption and maximize battery life time, the sensor node user equipment will be in sleep mode most of the time. During sleep mode, battery power consumption shall be dominated by the sleep clock oscillator, and it may be in the order of 1...10 microwatts.

In state-of-the-art user equipment, the sleep clock uses an on-chip oscillator circuit with an external 32.768 kHz clock crystal, whereas the radio transmission reference clock utilizes either an off-chip crystal oscillator according to figure 1, or an on-chip oscillator circuit with off-chip crystal according to figure 2. The sleep clock is typically calibrated against the more accurate radio transmission reference clock from a base station.

When targeting lowest power consumption during the sleep phase, ring oscillators or relaxation oscillators are alternatives to crystal oscillators. In "A Sub-nW Multistage Temperature Compensated Timer for Ultra-Low-Power Sensor Nodes", IEEE Journal of Solid States Circuits, Vol. 48, No. 10, Oct. 2013, describes a crystal-free sleep clock (relaxation type) oscillator for plain on-chip implementation offering very low power consumption, significantly lower when compared to a state-of-the-art 32 kHz crystal oscillator.

The market for NB-IoT modem chip-sets or modules is a highly cost sensitive market. The bill of material associated with an offered solution has significant impact on market success. In an NB-IoT user equipment modem, the 32-kHz crystal is a significant cost contributor.

It is therefore an object of the invention to provide a possibility that UE modem operates precisely without the bill-of-material cost contribution of the external crystal. Hence, it is an object of the present invention to reduce costs for an UE.

The object of the invention will be solved by a method for operating a Narrowband Internet-of-Things user equipment wherein in a first step for a paging reception after sleep mode of the NB-IoT UE the NB-IoT UE wakes up an the sleep clock oscillator integrated on-chip synchronizes to the radio signal received from the base station, and in a second step a back-off period is applied to allow for a deviation of an actual wake-up time of the NB-IoT UE against a targeted wake-up time using the reference clock oscillator in a low power mode for bridging a remaining time until an actual paging reception.

A state-of-the-art NB-IoT user equipment utilizes two crystal clock oscillators in order to ensure a stable reception of signals transmitted from a base station, and low power operation over long periods of time. For long sleeping periods of the NB-IoT UE, it is state-of-the-art to use a so-called sleep clock oscillator with a sleep clock crystal. Typically, 32 kHz watch clock crystals are employed, which consume little power due to the relatively low clock frequency. For active periods of the UE a reference clock oscillator with a reference clock crystal is used. Typical frequencies for the reference clock oscillator are 10 ... 50 MHz. Due to the higher clock frequency and caused by phase noise requirements, current consumption of the reference clock is significantly larger than that of the sleep clock. The idea of this invention is to limit the operation of the UE to only one crystal-based oscillator and to equip this clock with a low power mode, which exhibits a worse phase noise performance as is undesirable for the purpose of signal reception and transmission, but sufficient in sleep mode to bridge periods without transmit or receive operation at sufficiently high timing precision, and which offers the advantage that the low power mode has significantly lower power consumption than the normal operation mode. Furthermore, when replacing the sleep clock crystal oscillator by a plain on-chip relaxation oscillator, or ring oscillator, the sleep clock crystal can be completely eliminated from the UE, thus saving the cost of this component.

In an NB-IoT user equipment modem, the state-of-the-art sleep clock crystal is replaced by a plain on-chip low power sleep clock oscillator, in order to remove the bill-of-material cost contribution of the external crystal, making use of the fact, that the cost contribution of a fully on-chip oscillator will be comparably small. To cope with a reduced precision of this plain on-chip oscillator, compared to a crystal oscillator, exploit the frame structure of the radio signal received from the base station to calibrate the sleep clock oscillator against the radio network time, as received on a so-called anchor channel transmitted by the base station. And a back-off period is applied to capture a possible deviation of the actual wake-up time against the targeted wake-up time. So, utilizing the structure of the radio signal transmitted by the eNB, the NB-IoT UE receives this signal to synchronize to the eNB time as a first step after wakeup. But the accuracy achieved in this time synchronization is down to a fraction of a microsecond. After resynchronization it calculates the amount of time until when it shall actually receive the paging occasion. To bridge that time gap it utilizes the more accurate reference clock, targeting to keep the uncertainty of the reception start time very small, in the order of microseconds.

In one embodiment of the present invention the sleep clock oscillator is configured to wake-up prior to an actual paging reception signal from the base station at time instances given to the NB-IoT UE. The base station transmits paging at time instances given to the NB-IoT UE, and the NB-IoT UE is obliged to receive the paging message and check if any action is requested from it. Therefore, the sleep timer or sleep clock oscillator is configured to wake-up sufficiently well ahead of the actual paging reception, in order to mitigate jitter in the sleep clock.

In a further embodiment of the present method for operating a sensor node UE, the low power mode of the reference clock oscillator is achieved by reducing operation voltage as well as amplitude swing of the reference clock. The low-power mode compromises phase noise which is required for receiver and transmitter performance but still offers enough precision to satisfy requirements on wakeup timing uncertainty. Timing uncertainty will be larger in this low-power mode, compared to normal operation mode, but still satisfy the requirement for the operation of the NB-IoT UE.

In another further embodiment of the present method for operating a sensor node UE, the sleep clock oscillator frequency is calibrated by counting a number of full sleep clock cycles comparing this time interval against a fine granular time reference obtained by receiving the radio signal from the base station. This kind of self-calibration against the eNB time makes a factory calibration of the sleep clock oscillator frequency, e.g., via laser trimming, obsolete, thus avoiding such cost penalty.

In a preferred embodiment of the present method for operating a sensor node UE, a temperature sensor of the NB-IoT UE measures a chip temperature of the NB-IoT UE and an analog-to-digital converter reads the measurement temperature value and the controller records tuples of measured temperature and measured sleep clock oscillator frequency, which is fed into a learning algorithm for mitigating temperature variation. Since the sleep clock oscillator frequency is temperature-dependent, it is advantageous if a temperature sensor measures the chip temperature. The chip temperature matches very well the temperature of the sleep-clock oscillator circuitry, due to low thermal resistance of the chip material. An analog-to-digital converter reads the measurement temperature value, and the modem controller records tuples of (measured temperature, measured sleep clock oscillator frequency) into memory, feeding a learning algorithm which allows providing a close estimate of the sleep clock for any temperature.

So, in a further embodiment of the present method for operating a sensor node UE, the NB-IoT UE uses the measured temperature to calculate a number of sleep cycles until wake-up. This has the advantage to reduce the power consumption of the radio modem.

Furthermore, the NB-IoT UE uses the measured temperature for a prediction of a temperature development over time.

The object of the invention will also be solved by Narrowband Internet-of-Things user equipment for performing the invention method described above, wherein the sleep clock oscillator is integrated on-chip of the user equipment without a sleep clock crystal. A NB-IoT modem according to the present invention replaces the state-of-the-art 32kHz sleep clock crystal oscillator and its external crystal by a plain on-chip oscillator not using a crystal to set the frequency of the modem of the UE. A relaxation type of oscillator utilizing on-chip capacitance gives way to minimize current consumption by minimizing amounts of charge consumed per clock cycle. A drawback of this type of oscillator compared to the crystal oscillator is a significantly larger time uncertainty (long term jitter) but can be handled by the inventive described method above.

Alternative to a full on-chip implementation, the relaxation sleep clock oscillator may utilize a small external capacitor, which is significantly cheaper than a crystal. The relaxation sleep clock oscillator indicates the integration on-chip with the necessity of an external crystal.

Instead of a relaxation type of oscillator, a ring oscillator may be utilized for the sleep clock generation.

In an embodiment of the present inventive NB-IoT UE, the NB-IoT UE comprises a temperature sensor for measuring a chip temperature of the NB-IoT UE. Since the sleep clock oscillator frequency is temperature-dependent, a temperature sensor measures the chip temperature. The chip temperature matches very well the temperature of the sleep-clock oscillator circuitry, due to low thermal resistance of the chip material.

For performing the present inventive method a modified NB-IoT UE is necessary. The overall advantage and thus the solution of the underlying task of the invention is the reduction of the bill-of material cost of the system through the omission of the external sleep clock crystal and the usage of a modified reference clock oscillator with two modes, a normal operation mode and a low power mode.

The invention will be explained in more detail using exemplary embodiments.

The appended drawings show
- Fig. 1: Prior Art A of NB-IoT sensor node user equipment;
- Fig. 2: Prior Art B of NB-IoT sensor node user equipment;
- Fig. 3: Inventive NB-IoT sensor node user equipment;
- Fig. 4: Inventive NB-IoT sensor node user equipment performing the inventive method;
- Fig. 5: Table showing the activity levels of the UE and the power consumption and timing accuracy requirements;
- Fig. 6: Inventive NB-IoT sensor node user equipment with a temperature sensor.

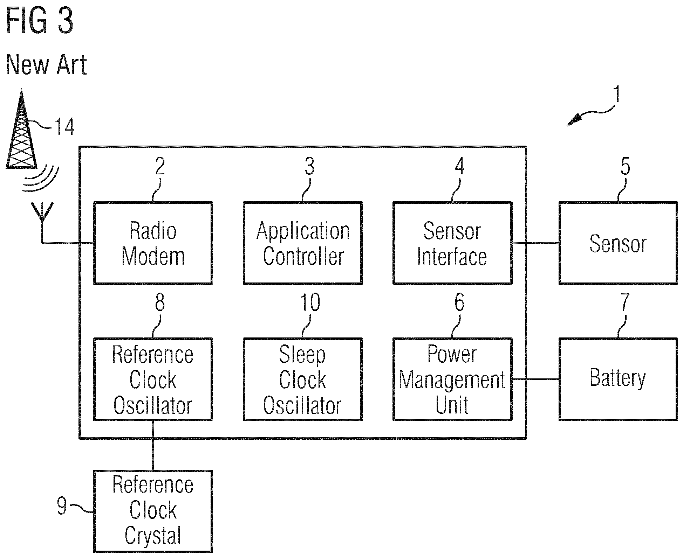

Figure 3 shows the inventive NB-IoT UE modem which replaces the state-of-the-art 32kHz sleep clock crystal oscillator with external crystal 11 by a plain on-chip oscillator 10 not using a crystal to set the frequency of the UE.

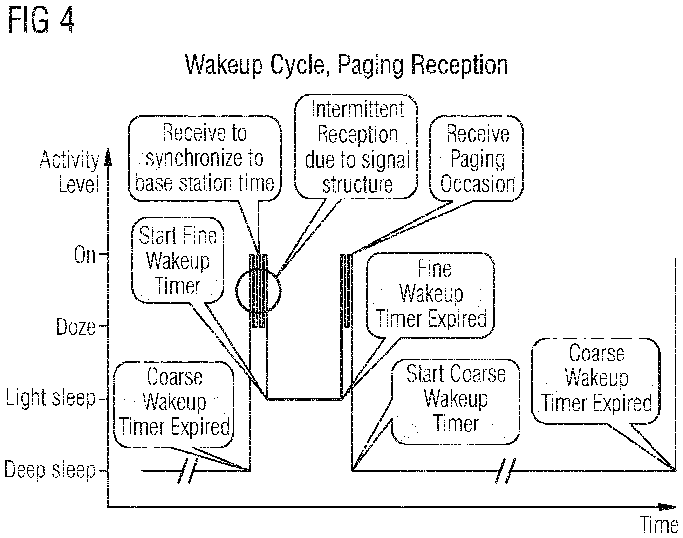

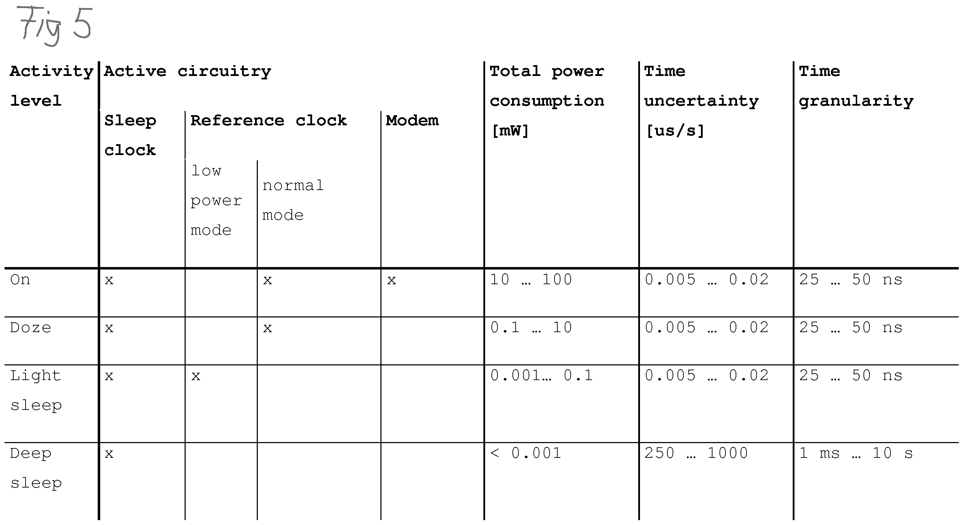

Figure 4 shows the activity level of the inventive UE performing the inventive method and how the UE copes with the time jitter. The eNB 14 transmits paging at time instances given to the UE 1, so the UE 1 is obliged to receive the paging message and check if any action is requested from it. The sleep clock oscillator 10 is configured for wake-up well ahead of the actual paging reception. The UE 1 wake-up when a timer has expired. Utilizing the structure of the signal transmitted from the eNB 14, the UE 1 receives this signal to synchronize to the eNB 14 time as a first step after wakeup. The accuracy achieved in this time synchronization is down to a fraction of a microsecond. After resynchronization it calculates the amount of time until when it shall actually receive the paging occasion. The UE 1 starts a fine wake-up timer by using the reference clock oscillator crystal 8, 9 in a low power mode. To bridge that time gap it utilizes the more accurate reference clock, targeting to keep the uncertainty of the reception start time very small, in the order of microseconds. The table shown in figure 5 gives an understanding of power consumption and timing accuracy requirements for the various activity levels of the user equipment 1. From this table it becomes clear that the low power sleep clock oscillator 10 is always running. After the fine wake-up timer has expired the UE 1 receives the paging occasion and afterwards the UE 1 falls in sleep mode and starts a next run of the coarse wake-up timer.

The reference clock serves the radio modem 2 of the UE 1, which derives its mixer frequencies from it as well as sampling clocks for analog-to-digital and digital-to-analog conversion happening inside the modem (not detailed further). The reference clock oscillator 8 equipped with a low-power mode, compromises phase noise (required for receiver and transmitter performance) but still offers enough precision to satisfy requirements on wakeup timing uncertainty. Timing uncertainty will be larger in this low-power mode, compared to normal operation mode, but shall still satisfy the requirement given in the table. To achieve the low power operation, operating voltage as well as amplitude swing of the reference clock is reduced. It is possible to insert a second timing synchronization step before paging reception. This will be required if the sleep clock oscillator 10 timing uncertainty is too large, such that the worst-case duration to be bridged in light sleep mode of the reference clock oscillator 8 becomes too large to reach uncertainty limits of the paging reception start time.

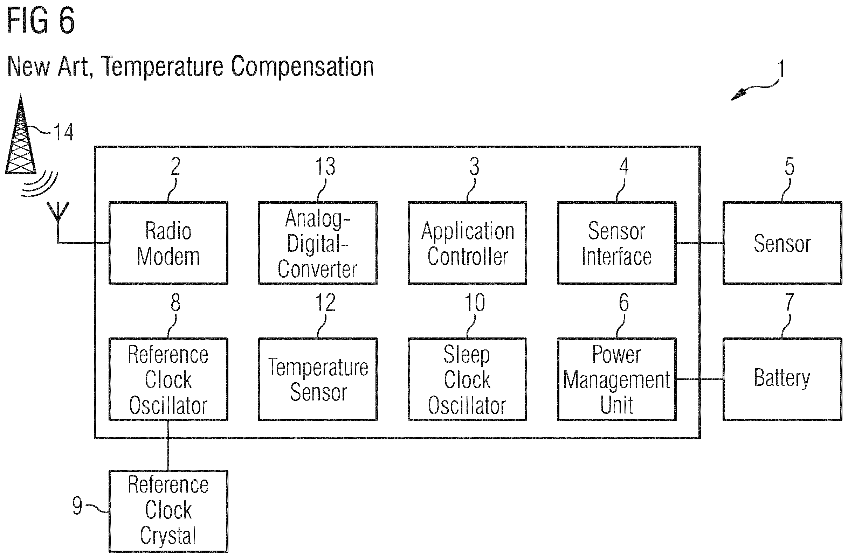

Since the sleep clock oscillator 10 frequency is temperature-dependent, a temperature sensor 12 measures the chip temperature, see figure 6. The chip temperature matches very well the temperature of the sleep clock oscillator circuitry, due to low thermal resistance of the chip material.

An analog-to-digital converter 13 reads the measurement temperature value, and the modem controller records tuples of (measured temperature, measured sleep clock frequency) into memory, feeding a learning algorithm which allows providing a close estimate of the sleep clock for any temperature. Before entering sleep mode, the UE 1 uses temperature reading and prediction of the temperature development over time (considering cooling back after activity) to calculate the number of sleep clock cycles until wakeup.

### List of Reference Signs

- 1: NB-IoT sensor node user equipment
- 2: radio modem
- 3: application controller
- 4: sensor interface
- 5: sensor
- 6: power management unit
- 7: battery
- 8: reference clock oscillator
- 9: reference clock crystal
- 10: sleep clock oscillator
- 11: sleep clock crystal
- 12: temperature sensor
- 13: analog-to-digital converter
- 14: base station

## Claims

1. A method for operating a Narrowband Internet-of-Things user equipment, NB-IoT UE, comprising a radio modem for receiving and transmitting radio frequency signals from a base station, an application controller for controlling the NB-IoT UE, a sensor interface for controlling a sensor, a power management unit for regulating a battery of the UE, a reference clock oscillator controlled by an external reference clock crystal and for serving the radio modem and a sleep clock oscillator for controlling sleep periods of the NB-IoT UE, **wherein** in a first step for a paging reception after sleep mode of the NB-IoT UE the NB-IoT UE wakes up and the sleep clock oscillator integrated on-chip synchronizes to the radio signal received from the base station, and in a second step a back-off period is applied to allow for a deviation of an actual wake-up time of the NB-IoT UE against a targeted wake-up time using the reference clock oscillator in a low power mode for bridging a remaining time until an actual paging reception.

2. The method for operating a sensor node user equipment according to claim 1, wherein the sleep clock oscillator is configured to wake-up prior to an actual paging reception signal from the base station at time instances given to the NB-IoT UE.

3. The method for operating a sensor node user equipment according to claim 1, wherein the low power mode of the reference clock oscillator is achieved by reducing operation voltage as well as amplitude swing of the reference clock.

4. The method for operating a sensor node user equipment according to one of the claims 1 to 3, wherein the sleep clock frequency is calibrated by counting a number of full sleep clock cycles and comparing this time interval against a fine granular time reference obtained by receiving the radio signal from the base station.

5. The method for operating a sensor node user equipment according to one of the claims, wherein a temperature sensor of the NB-IoT UE measures a chip temperature of the NB-IoT UE and an analog-to-digital converter reads the measurement temperature value and the controller records tuples of measured temperature and measured sleep clock frequency, which is fed into a learning algorithm for mitigating temperature variation.

6. The method for operating a sensor node user equipment according to claim 5, wherein the NB-IoT UE uses the measured temperature to calculate a number of sleep clock cycles until wake-up.

7. The method for operating a sensor node user equipment according to claim 5, wherein the NB-IoT UE uses the measured temperature for a prediction of a temperature development over time.

8. A Narrowband Internet-of-Things user equipment for performing the method according to claims 1 to 7, comprising a radio modem for receiving and transmitting radio frequency signals from a base station, an application controller for controlling the NB-IoT UE, a sensor interface for controlling a sensor, a power management unit for regulating a battery, a reference clock oscillator controlled by an external reference clock crystal and a sleep clock oscillator for controlling sleep periods of the NB-IoT UE, **wherein** the sleep clock oscillator is integrated on-chip of the user equipment without a sleep clock crystal.

9. The NB-IoT UE according to claim 8, wherein the sleep clock oscillator utilizes a small external capacitor.

10. The NB-IoT UE according to claim 8, wherein the sleep clock oscillator is a ring-oscillator.

11. The NB-IoT UE according to claim 8, wherein the sleep clock oscillator is a relaxation oscillator.

12. The NB-IoT UE according to claims 8 to 11, wherein the NB-IoT UE comprises a temperature sensor for measuring a chip temperature of the NB-IoT UE.
